# EUROPEAN PATENT APPLICATION

(11) **EP 3 648 456 A1**
(43) Date of publication of application: **06.05.2020**
(21) Application number: 18203824.0
(22) Date of filing: 31.10.2018
(51) Int. Cl.: H04N 5/44, H04N 21/422, H04N 21/4425, G08C 17/00, H04N 21/488

(54) **CONTROLLER AND METHOD OF PROCESSING CONTROL COMMANDS FOR OPERATION OF AN ELECTRONIC DEVICE**

(71) Applicant: Vestel Elektronik Sanayi ve Ticaret A.S., 45030 Manisa (TR)
(72) Inventor: ÖZTEKIN,, Güner, 45030 Manisa (TR); EGEMEN,, Tufan, 45030 Manisa (TR); YILMAZ,, Evren Gökhan, 45030 Manisa (TR)
(74) Representative: Flint, Adam

(57) **Abstract**

A controller (112) is configured to process a control command received from a control device (12) and intended for controlling an electronic device (110). If the control command is a command that is not recognised by the controller (112), the controller (112) is configured to cause transmission of a signal for reception by said control device (120), the signal requesting automatic retransmission of the control command by said control device (120). If the control command is a command that is recognised by the controller (112) but is determined not to be a valid control command, the controller (112) is configured to cause a request to be indicated for a user (130) to re-enter or confirm the command.

## Description

### Technical Field

The present disclosure relates to a controller and a method of processing control commands for operation of an electronic device.

### Background

Many electronic devices, such as television sets, set-top boxes, DVD players, Blu Ray players, games consoles, etc., are provided with control devices with which a user can control the electronic device. To do so, the user provides an input at the control device which causes the control device to transmit a corresponding control command to a controller of the electronic device. The controller, upon receiving the control command, causes a corresponding action to be enacted at the electronic device. For example, a user may press an ON button (also called a key) of a control device to turn on a television set. Other forms of input at the control device as possible. For example, the user may translate, rotate, or shake the control device, or manipulate it in some other manner.

A typical control device is a handheld device for operation by the user when the user desires to control the electronic device remotely. Known remote control devices comprise a transmitter for transmitting control signals to an external device via, for example, a modulated infrared light output.

### Summary

According to a first aspect disclosed herein, there is provided a controller for processing control commands, the controller being configured to process a control command which is received from a control device in accordance with an input by a user and which is intended for controlling an electronic device; wherein the controller is configured such that if the control command is a command that is not recognised by the controller, the controller causes transmission of a signal for reception by said control device, the signal requesting automatic retransmission of the control command by said control device; and wherein the controller is configured such that if the control command is a command that is recognised by the controller but is determined not to be a valid control command, the controller causes a request to be indicated for a user to re-enter or confirm the command.

In an example, the controller is configured to determine that a received control command is not recognised if there is no control function of said electronic device to which said control command is assigned. This may be the case, e.g. if interference has caused the control command to be corrupted such that the control command is not recognised at all by the controller.

In an example, the controller is configured to determine that a received control command is not a valid control command taking account of the current state of the electronic device. That is, the controller may be configured to determine that a received control command is not valid based on the current state of the electronic device. For example, the control command may not be valid in view of the circumstances at that particular time.

In an example, the controller is configured to determine that a received control command is not a valid control command if the control command has no effect given the current state of the electronic device.

In an example, the controller is configured to determine that a received control command is not a valid control command if the control command is a second instance of the same control command received before processing of the first control command is complete.

In an example, the controller is configured to determine that a received control command is not a valid control command if the control command is received within a predetermined period of time of a previous control command.

In an example, the controller is configured to determine that a received control command is not a valid control command if the control command is received within a predetermined period of time of a previous control command and the control command and the previous control command are triggered by operation of respective keys on the control device that are adjacent to one another.

In an example, the controller is configured to determine that a received control command is not a valid control command if the control command is received within a predetermined period of time of a previous control command and the control command contradicts the previous control command.

In an example, the controller is configured such that causing a request to be indicated for a user to re-enter or confirm the command comprises causing a signal to be transmitted to the control device which is such that the request is indicated to the user by the control device.

Causing the request to be indicated for the user to re-enter or confirm the command may comprise one or more of: causing a light source to turn on or flash; causing a message to be displayed on a display screen; causing a notification to be output by a speaker; causing a vibrator to generate haptic feedback to the user. The indication can be enacted at the control device, the electronic device, or a separate indication device.

In an example, the controller is configured to count a number of times it has caused automatic retransmission of the control signal, and to not cause further retransmission if the number of times exceeds a predetermined threshold.

According to a second aspect disclosed herein, there is provided a method of processing control commands, the method comprising: receiving a control command from a control device in accordance with an input by a user and which is intended for controlling an electronic device; determining whether the control command is a command that is recognised or not recognised; if the control command is determined not to be recognised, causing transmission of a signal for reception by said control device, the signal requesting automatic retransmission of the control command by said control device; if the control command is determined to be recognised, determining whether the control command is valid or invalid; if the control command is determined to be invalid, causing a request to be indicated for a user to re-enter or confirm the command; and if the control command is determined to be valid, causing a control function corresponding to the control command to be enacted by the electronic device.

In an example, a received control command is determined as not recognised if there is no control function of said electronic device to which said control command is assigned.

In an example, a received control command is determined as not a valid control command taking account of the current state of the electronic device.

In an example, a received control command is determined as not a valid control command if the control command is a second instance of the same control command received before the control function corresponding to the control command has been enacted by the electronic device.

In an example, a received control command is determined as not a valid control command if the control command is received within a predetermined period of time of a previous control command.

### Brief Description of the Drawings

To assist understanding of the present disclosure and to show how embodiments may be put into effect, reference is made by way of example to the accompanying drawings in which:
Figure 1 shows schematically a user using a control device to remotely control an electronic device;
Figure 2 shows schematically a more detailed view of an example of a control device and an electronic device; and
Figure 3 shows a flow chart of a method in accordance with examples described herein.

### Detailed Description

In known control systems, it is common to use a control device to control an electronic device. The control device transmits control commands to a controller of the electronic device via a wired or wireless connection which are received and acted upon accordingly by the electronic device. As a particular example, a television set may be control by a remote control device via infrared (IR) signals. The remote control device comprises an IR transmitter and the television set comprises an IR receiver. The transmitted and received IR signals are encoded data which represent specific operations of the television set (e.g. ON/OFF, volume up, volume down, channel up, channel down, etc.). The television set receives the control command and acts upon it.

However, it can happen that the controller does not recognise the received control signal or for example the control signal appears not to be a sensible control signal given the current state of the electronic device.

In an example of the present disclosure, a controller is provided for controlling an electronic device. The controller is configured to perform two checks upon receiving a control command from a control device:
A) that the received control command is recognised by the controller; and
B) if the received control command is recognised, that it is a valid command.

If check A is failed, the controller requests automatic retransmission of the control command by the control device. If step B is failed, the controller is configured to cause a request to be indicated for a user to re-enter or confirm the command. If the control command passes both tests, then the controller enacts the corresponding control of the electronic device. Other examples are described in detail below with reference to the figures.

This addresses a number of things. First, the control command may not be recognised by the controller. This may be due to, for example, interference caused to the signal sent from the control device to the electronic device. In other words, the signal received by the electronic device may not represent any recognised control command. In this case, known controllers do not know what command was intended, and have no way to determine which operation to perform. Similar issues can occur with wireless communication technologies such as IR, Bluetooth, WiFi, etc., as well as wired communication technologies such as Ethernet connections. Secondly, even if the control command may be recognised by the controller, it may not be a valid control command. For example, the command may relate to a functionality that is not possible given the current state of the electronic device, such as a "volume down" command for a television set when the sound is already muted, or is not a sensible command given another command recently received at the controller.

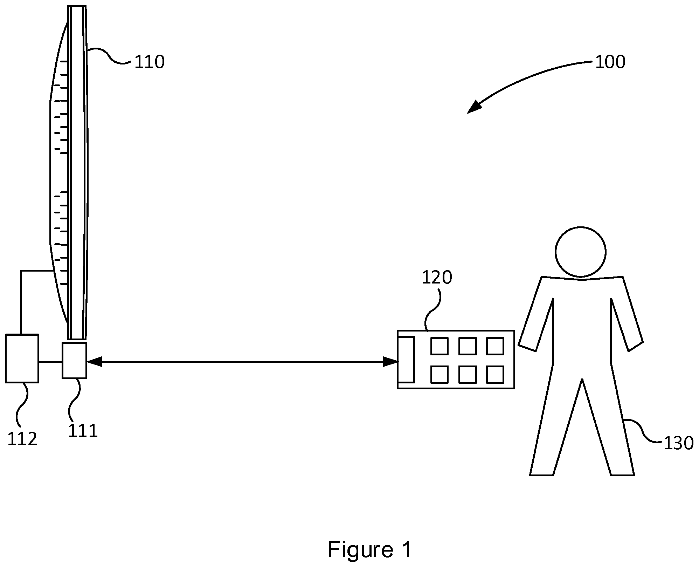

Referring now to the drawings, Figure 1 shows schematically examples of an electronic device 110, a controller 112, a transceiver 111 and a control device 120. The controller 112 is operatively coupled to the electronic device 110 by a wired connection. The controller 112 is also operatively coupled to the transceiver 111 by a wired connection.

In the example of Figure 1, the electronic device 110 is a television set. Other examples of electronic devices 110 include set-top boxes, DVD players, Blue Ray players, PVRs (personal video recorders, also known as DVRs or digital video recorders), games consoles, etc. The nature of control input by users varies from electronic device type to another (for example, a user of a games console may at some points provide many more control commands per second than a user of a DVD player). However, there still exist situations for any type of electronic device in which the user 130 will only provide relatively sporadic inputs, such as when browsing a menu or adjusting the volume during video playback, etc.

The electronic device 110, controller 112 and transceiver 111 are shown separately in Figure 1 for the sake of clarity, but in some configurations, the controller 112 and transceiver 111 may be integrated into the housing of the electronic device 110 itself, such as usually the case with, e.g., a television set and other electronic devices.

The transceiver 111 is constructed and arranged to communicate with the control device 120 via a wired or wireless connection. For example, the transceiver 111 may communicate with the control device 120 via a wireless connection. As a particular example, the wireless connection may be an infrared (IR) connection, also called Consumer Infrared (CIR). The control device 120 is operated by a user 130, as shown in Figure 1 and described in more detail below, in order to control the electronic device 110.

The user 130 manipulates the control device 120 in accordance with a desired control command, e.g. by pressing one or more keys on the control device 120, each key or combination of keys being associated with a specific control command which the user 130 can select. This causes the control device 120 to generate and transmit desired corresponding control command to the controller 112 via the transceiver 111. The controller 112, upon receiving the control command, may control the electronic device 110 in accordance with the received control command. This is subject to the received control command being recognised by the controller 112 and being a valid control command, as described in more detail below. For example, the controller 112 may turn the electronic device ON/OFF in response to a corresponding control command from the control device 120, e.g. transmitted in response to the user 130 pressing an ON/OFF key on the control device 120.

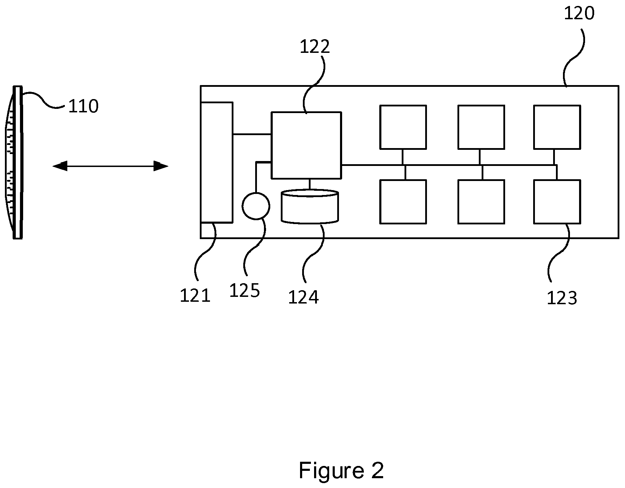

Figure 2 shows the control device 120 in more detail. The control device 120 comprises a transceiver 121, a processor 122, one or more keys 123, an electronic storage 124, and an indicator 125. The processor 122 is operatively coupled to each of the transceiver 121, the keys 123, the electronic storage 124, and the indicator 125, e.g., via respective wired connections.

Each key 123 or combination of keys is typically associated with a specific control function of the electronic device 110. For example, if the electronic device 110 is a television set, there may be separate keys on the control device 120 for ON, OFF, volume up, volume down, channel up, channel down, menu, etc.

The processor 122 can determine when one or more of the keys 123 has been pressed. In response to the user 130 pressing one or more of the keys 123, the processor 122 causes a corresponding command to be generated and transmitted to the electronic device 110 via the transceiver 121. This may comprise for example causing the transceiver 121 to output a modulated or otherwise encoded wireless signal, as known in the art per se.

The keys 123 in this example represent hardware via which the user 130 can interact with the control device 120. Other hardware may be used such as G-sensors, optoelectronic sensors, scroll wheels, etc. In any case, the user 130 manipulates the hardware (e.g. presses one or more of the keys 123) which can be detected by the processor 122 to determine the corresponding control command to be transmitted to the electronic device 110, as described above.

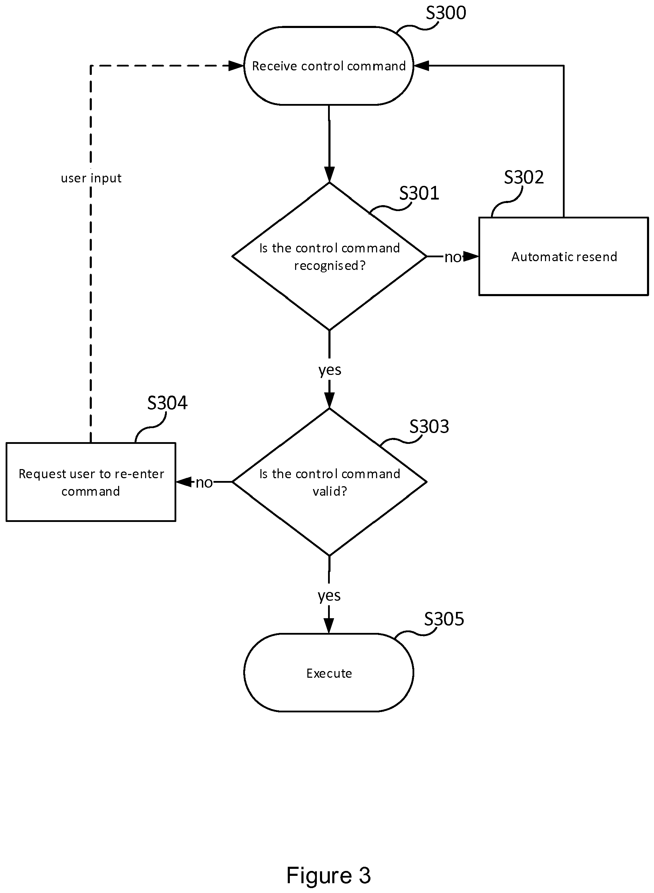

The electronic storage 124 is provided for storing a most recently sent control command of the control device 120. This is used in an automatic retransmission step when the control command received by the controller 112 is not recognised. This is described in more detail below in relation to Figure 3.

The indicator 125 is provided for prompting the user 130 to re-enter a control command when the controller 112 of the electronic device 110 determines that a received control command is recognised but invalid. Reception by the controller 112 of such a control command may be indicative of the user 130 having entered an incorrect control command (e.g. by pressing the wrong key 123). Again, this is described in more detail below in relation to Figure 3.

Figure 3 is a flowchart illustrating an example method performed by the controller 112.

At S300, the controller 112 receives a control command from the control device 120 via the transceiver 111. The controller 112 may then decode, or at least attempt to decode, the received control command depending on the particular transmission protocol via which the control command was transmitted to the transceiver 111.

At S301, the controller 112 determines whether the control command which was received at S300 is a recognised control command. This comprises determining if the control command corresponds to a known control operation of the electronic device 110, using for example a look-up table. For example, different specific bit sequences may be assigned to different specific operations. If the received control command is a bit sequence that is recognised as being assigned to an operation (e.g. ON) of the electronic device 110, then the control command is determined to be recognised. If, on the other hand, the received control command is a bit sequence that is not assigned to an operation, then that control command is determined to be not recognised. This may occur if for example one or more bits of the control command are corrupted during transmission due to, e.g. interference in the IR signal transmitted from the control device 120 to the controller 112.

If the control command is not recognised, then the method proceeds to S302 wherein the controller 112 causes automatic retransmission of the control command by the control device 120. To do so, the controller 112 transmits a signal for reception by the transceiver 121 of the control device 120 in which the signal requests automatic retransmission of the control command.

As mentioned above, the control device 120 stores the most recently transmitted control command in electronic storage 124. The electronic storage 124 in this way acts as a buffer. In response to receiving the automatic retransmission signal from the controller 112, the processor 122 of the control device 120 retrieves the most recently transmitted control command from the electronic storage 124 and transmits it again to the controller 112. The controller 112 responds to reception of the retransmitted control command in the same manner as described at S300. That is, the controller 112 itself does not need to know whether the control command it receives at S300 is the first instance of that control command or a retransmitted version of the control command; the controller 112 proceeds to S301 as described above in either case. Hence, if the control command is still not recognised at S301, the controller 112 will proceed again to S302 and cause automatic retransmission. The controller 112 may be configured to count the number of times a particular control command has been requested and to quit if the count exceeds a predetermined threshold. For example, the controller 112 may be configured to only request retransmission of a particular control command one time or perhaps two or three times.

If the controller 112 determines at S301 that the received control command is a recognised control command, it then proceeds to S303 wherein the controller 112 determines whether the control command is a valid control command. Examples of invalid control commands include:
(1) Unexpected command: if the received command is likely to be unintended by the user 130. In this regards, determining if the received command is likely to be unintended by the user 130 will typically be contextual, that is, depending on the current state of the electronic device 110. Hence, the controller 112 may be configured to take into account the current state of the electronic device 110 when determining whether a received control command is valid. For example, if the command is to turn OFF the electronic device 110 or put it into STANDBY very soon after the electronic device 110 has been turned on. In a specific example, the electronic device 110 may be a television set displaying video content, including for example video-on-demand. As another example, the user may be playing a game on or via the electronic device 110. A command to turn OFF the television set received within a predetermined period of time after the start of video playback or whilst a game is being played on the electronic device 110 may be regarded as invalid because it is unlikely that the user 130 intended this. Other examples of use of an electronic device 110 where it is considered unlikely that a user intended to turn off the electronic device 110 or put it into standby include operations such as application navigation (for example, when moving through sequential or tiered menus), video trick modes, internet surfing, and browsing music or movies etc. stored locally to the electronic device 110.
(2) Meaningless command: if the received control command is a recognised command (e.g. a "menu" command to bring up the options menu) but is not currently meaningful in that it does not have any effect given the current state of the electronic device (e.g. the menu is already being displayed). Hence, the controller 112 may be configured to determine that a received control command is not valid if it has no effect given the current state of the electronic device 110.
(3) A repeated command: if the controller 112 has not yet completed processing of a previous control command when it receives the same command again. Hence, the controller 112 may be configured to determine that a control command is not valid if it is a second instance of the same control command received before processing of the first instance is complete.
(4) Impossibly quick input: if the controller 112 receives two or more control commands from the control device 120 within a window of time that is too short to expect a human user 130 to have input those control commands. For example, human reaction times are typically around 200ms or so. Hence, the controller 112 may be configured to determine that a control command is invalid if it was received within a predetermined period of time of a previously-received control command. A typical human response time (e.g. around 200ms) is an example of a suitable predetermined period of time.
(5) Close key commands: if the received control command is received within a predetermined period of time of another control command and the two control commands are triggered by operation of respective keys 123 on the control device 120 that are close to each other, for example adjacent one another on the control device 120. Two keys 123 that are close to each other could have easily been pressed by the user 130 at the same time. This may be the case, for example, if a child steps on the control device 120.
(6) Contradictory keyflow: if the controller 112 receives two or more control commands in a short period of time that contradict each other. For example, a command to pause video playback and a command to begin video playback, received within a second of each other. Hence, the controller 112 may be configured to determine that a received control command is not valid if it was received within a predetermined period of time of a contradictory control command.

The controller 112 may be configured to use a single one of these criteria (1-6), or any two or more in combination. If the controller 112 determines that the received control command is invalid, it proceeds to S304 wherein the controller 112 requests that the user 130 re-enter the desired control command.

The controller 112 may operate using a state machine, such that at least some commands received at the controller 112 are acted upon depending on the current state of the electronic device 110. A classic, simple example is that there is a single ON/OFF key on the remote control device 120 and a control signal sent following operation of that key causes the electronic device 110 to switch on or off depending on whether the electronic device 110 is currently off or on respectively. Many operations of electronic devices 110 are performed in accordance with a state machine. Examples described herein may use one or more state machines to determine whether a command that is received and recognised is a valid command given the current state of the electronic device 110.

Table 1 illustrates an example of a state transition table for a state machine with a few examples of actions performed in response to different keys being pressed on the control device 120, wherein the action may depend on the current state of the electronic device 110. That is, the action that is taken when a key is received at the electronic device 110 may be different depending on the current state of the electronic device 110 (the same key can have different results depending on the current state of the electronic device 110).

**Table 1**

| **Key** | **Current State** | **Action** |
|---|---|---|
| Standby/Exit/Back keys (interruption keys) | Watching video-on-demand | Prompt user for confirmation |
| Standby/Exit/Back keys(interruption keys) | While Installation menu | Prompt user for confirmation |
| Standby/Exit/Back keys (and interruption keys) | While launching a critical process like from one VOD to other VOD (Netflix - Youtube switch case) | Prompt user for confirmation |
| Standby | Watching live TV | Turn off TV |
| Standby | Going to Standby | Request resend from RC |
| Standby | Getting out of Standby, during waking up for many tasks and processes initiating | Request resend from RC and Prompt user for confirmation if still RC sends Standby key |
| Any key sequence faster than normal human response time | Any State | Prompt user for confirmation |
| Undefined key sequence | Any State | Request resend from RC |
| Close key combination | Any State | Request resend from RC |
| Broken key combination data | Any State | Request resend from RC |

In some examples, the controller 112 may use the indicator 125 shown in Figure 2 to prompt the user 125 to re-enter the desired control command. To do so, the controller 112 may transmit a signal to the control device 120 that causes the control device 120 to prompt the user 130, using the indicator 125, to enter the desired control command. In this sense, the controller 112 requests that the user 130 clarify what control command was intended.

The indicator 125 may indicate to the user 130 in any suitable manner. For example, the indicator 125 may comprise a light source such as an LED which is configured to illuminate or flash in order to signal to the user 130 that the control command should be re-entered. In another example, the indicator 125 may comprise a speaker configured to output an audible sound to the user 130 that the control command should be entered. In yet another example, the indicator 125 may comprise a vibrator such as an eccentric rotating mass (ERM) or piezoelectric vibrator configured to vibrate to signal to the user 130 that the control command should be entered.

In other examples, the controller 112 may use an indicator located at the electronic device 110, or the electronic device 110 itself, to request that the user 130 re-enter the desired control command. For example, the controller 112 may cause a screen of the electronic device 110 to display a message or icon prompting the user 130 to re-enter the control command. An indicator located locally at the electronic device 130 may be a simple flashing light or LED or a buzzer or the like. In the case that the electronic device 110 has a display screen, an indication may be presented on the display screen to prompt the user to re-enter the control command.

In response to the indication, the user 130 may or may not provide input at the control device 120 causing transmission of the desired control command. This is indicated by the dotted line in Figure 3. If the control command is received, the controller 112 responds to reception of the re-input control command in the same manner as described above at S300.

If, at S303, the controller 112 determines that the received control command is valid, then the controller proceeds to S305 wherein the controller 112 causes the corresponding control function to be enacted by the electronic device 110.

The controller 112 can therefore be sure that the control command is both recognised and valid before proceeding to enact the control function. This can prevent the electronic device 110 from acting in an undesired way (from the perspective of the user 130). This may be particularly useful for preventing operating of the electronic device 110 by children who may manipulate the control device 120 in a chaotic manner, e.g. by pressing many keys 123 at once or in quick succession.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory (e.g. a solid-state drive or SSD).

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A controller for processing control commands,
the controller being configured to process a control command which is received from a control device in accordance with an input by a user and which is intended for controlling an electronic device;
wherein the controller is configured such that if the control command is a command that is not recognised by the controller, the controller causes transmission of a signal for reception by said control device, the signal requesting automatic retransmission of the control command by said control device; and
wherein the controller is configured such that if the control command is a command that is recognised by the controller but is determined not to be a valid control command, the controller causes a request to be indicated for a user to re-enter or confirm the command.

2. A controller according to claim 1, wherein the controller is configured to determine that a received control command is not recognised if there is no control function of said electronic device to which said control command is assigned.

3. A controller according to claim 1 or claim 2, wherein the controller is configured to determine that a received control command is not a valid control command taking account of the current state of the electronic device.

4. A control according to claim 3, wherein the controller is configured to determine that a received control command is not a valid control command if the control command has no effect given the current state of the electronic device.

5. A controller according to any of claims 1 to 4, wherein the controller is configured to determine that a received control command is not a valid control command if the control command is a second instance of the same control command received before processing of the first control command is complete.

6. A controller according to any of claim 1 to 5, wherein the controller is configured to determine that a received control command is not a valid control command if the control command is received within a predetermined period of time of a previous control command.

7. A controller according to any of claims 1 to 6, wherein the controller is configured to determine that a received control command is not a valid control command if the control command is received within a predetermined period of time of a previous control command and the control command and the previous control command are triggered by operation of respective keys on the control device that are adjacent to one another.

8. A controller according to any of claims 1 to 7, wherein the controller is configured to determine that a received control command is not a valid control command if the control command is received within a predetermined period of time of a previous control command and the control command contradicts the previous control command.

9. A controller according to any of claims 1 to 8, wherein the controller is configured such that causing a request to be indicated for a user to re-enter or confirm the command comprises causing a signal to be transmitted to the control device which is such that the request is indicated to the user by the control device.

10. A controller according to any of claims 1 to 9, wherein the controller is configured to count a number of times it has caused automatic retransmission of the control signal, and to not cause further retransmission if the number of times exceeds a predetermined threshold.

11. A method of processing control commands, the method comprising:
receiving a control command from a control device in accordance with an input by a user and which is intended for controlling an electronic device;
determining whether the control command is a command that is recognised or not recognised;
if the control command is determined not to be recognised, causing transmission of a signal for reception by said control device, the signal requesting automatic retransmission of the control command by said control device;
if the control command is determined to be recognised, determining whether the control command is valid or invalid;
if the control command is determined to be invalid, causing a request to be indicated for a user to re-enter or confirm the command; and
if the control command is determined to be valid, causing a control function corresponding to the control command to be enacted by the electronic device.

12. A method according to claim 11, wherein a received control command is determined as not recognised if there is no control function of said electronic device to which said control command is assigned.

13. A method according to claim 11 or claim 12, wherein a received control command is determined as not a valid control command taking account of the current state of the electronic device.

14. A method according to any of claims 11 to 13, wherein a received control command is determined as not a valid control command if the control command is a second instance of the same control command received before the control function corresponding to the control command has been enacted by the electronic device.

15. A method according to any of claims 11 to 14, wherein a received control command is determined as not a valid control command if the control command is received within a predetermined period of time of a previous control command.
